# EUROPEAN PATENT SPECIFICATION

(11) **EP 0 738 051 B1**
(45) Date of publication and mention of the grant of the patent: **21.05.2003**
(21) Application number: 96105054.9
(22) Date of filing: 29.03.1996
(51) Int. Cl.: H04B 3/20, H04B 3/23

(54) **Process and device to acknowledge the disabling tone of the echo suppressor in telecommunication systems**
Verfahren und Einrichtung zum Quittieren eines Disable-Tons eines Echounterdrückers in Fernmeldesystemen
Procédé et dispositif pour excuser la réception d'une tonolité de neutralisation d'un suppresseur d'écho dans des systèmes de télécommunication

(30) Priority: 10.04.1995 IT MI950732
(43) Date of publication of application: 16.10.1996
(73) Proprietor: Italtel S.p.a., 20154 Milano (IT)
(72) Inventor: Orazio, Biglietti, 20010 S. Giorgio Su Legnano (MI) (IT); Dalmazio, Raveglia, 20133 Milano (IT); Compagnoni Dario, Monzio, 20090 Segrate (MI) (IT)
(74) Representative: Maccalli, Marco

(56) References cited:
- WO-A-94/18759
- KEMMESIES ET AL.: "ECHOKOMPENSATOR IN WELTWEITEN NACHRICHTENVERBINDUNGEN" TELCOM REPORT, vol. 9, no. 6, 1986, pages 352-357, XP002114807 MUNICH (DE)

## Description

### Field of the Invention

The invention relates to the process for the acknowledgement of the disabling tone of the echo suppressor in telecommunication systems and to a device implementing this procedure.

Elimination of the known echo phenomenon during voice telephone communications is implemented in telephone exchanges through two different typologies of devices.

The first typology is called echo canceller and essentially consists of adaptive digital filters which, operating on voice signals in digitized form, allow to obtain the original wave shape of the voice signal without the echo (effect).

The second typology of devices is called echo suppressor and essentially consists of a high impedence device which is inserted in the telephone line to attenuate the echo signal as much as possible.

As it is known, the presence of both the device typologies can originate drawbacks during communications of non voice type, as data transmission, telefax connections, etc.. In these cases, it shall be possible to automatically disable the devices.

The present invention relates to a procedure and a device to acknowledge the disabling tone of the above mentioned second device typology (echo suppressor).

In fact, the line terminal equipments of transmission systems, when a non voice call is established send a predeterminated signal or tone to control the disabling of the echo suppressor.

Conventionally this predeterminated tone consists of a sinusoidal signal having 2100 Hz frequency.

The device shall therefore be able to acknowledge the presence of this tone and, following the acknowledgement, disable the echo suppressor.

However, the check of the presence or not of this tone is not easy to perform, mainly due to the noise which can be superimposed to the useful signal, and to possible variations of the tone characteristics versus the above mentioned nominal values, within some tolerances.

In fact, CCITT G.164 and G.165 specifications require that the signal in presence of which disabling must be possible, can be a tone within the frequency band 2079 to 2121 Hz (that is 2100 Hz ± 21 Hz). Furthermore, in a widened band: 1900 Hz to 2350 Hz, disabling can be possible but out of this widened band, disabling can not be possible.

The tone presence acknowledgement system shall remain in operation also in presence of a white noise in the band 300 to 3400 Hz together with the 2100 Hz disabling signal.

A white noise having level ≥ -5 dB versus the disabling tone of 2100 Hz must be tolerated by the acknowledgement system. Vice versa, should the level of the white noise be higher than the 2100 Hz disabling tone level, the echo suppressor disabling shall be inhibited.

A 2100 Hz level tone higher than - 30 dB must be accepted while a tone having level lower than - 35 dB shall be rejected.

The enabling operational time of the echo suppressor disabling system shall be lower than 400 ms.

### Background Art

Some solutions have been proposed for the acknowledgement of the disabling tone of the echo canceller, that is solutions complying with G165 CCITT specifications have been proposed. On the contrary, the applicant is not aware of proposals for the acknowledgement of the echo suppressor disabling tone, that is, he is not aware of solutions complying with G164 CCITT specifications.

However, it must be considered that the procedure and device, scope of this invention, though having preferential application for the acknowledgement of the echo suppressor disabling tone, can find advantageous application also for the acknowledgement of the echo canceller disabling tone. For sake of clearness, we shall refer to a device for the acknowledgement of the echo suppressor disabling tone, but this statement has not to be considered as restrictive, being the subject device advantaegeously applicable also for the acknowledgement of the echo canceller disabling tone in compliance with Reccomandation CCITT G164.

In the paper "A simple phase-reversal tone disabler" by J.L. Melsa and R.J. Raglan, IEEE 1986, ICASSP 86, TOKYO, 48.22.1-48.22.4, page 2619 through 2622, an algorithm has been proposed for the acknowledgement of the echo canceller disabling tone capable to operate also in presence of noise.

This method foresees the use of one filter only, and, to consider the possible shifting in frequency of the tone (within allowed limits) it foresees the presence of a compensation circuit.

However, the algorithm at the basis of this method requires for its implementation a delay unit, a phase corrector, two low-pass filters and a phase discriminator. The implementation of all these functions on a DSP (Digital Signal Processor) results complex and requires the accomplishment of floating point arithmetic calculations which poorly suit to the characteristics of a DSP having normal performances and limited cost, and make difficult the implementation of real time acknowledgement systems.

A tone disabling acknowledgement procedure considerably less expensive and intrinsecally more reliable also in presence of heavy noises or when the tone has a signal level particularly low is disclosed in WO-A-9418759 in the name of the Applicant.

According to this procedure, a digitized sample sequence x(n), is filtered through a bandpass digital filter (BP) and at the same time through a Hilbert transformer (HT) with similar characteristics and the two signals 90-degree phase shifted are both sub-sampled through identical decimators. Two components of a signal (complex) are thus considered, whose module or power, records the possible phase-reversal event of the disabling tone as sharp temporary reduction of amplitude. The event can be identified employing values assumed of the complex signal magnitude in three . subsequent sampling moments at least.

While achieving a reliability degree complying with CCITT Recommendations G.164 and G165 , and not requiring the calculation of inverse trigonometric functions (typically tan⁻¹) to calculate the phase skip value, the system maintains a rather favourable computation complexity, in consideration of processing times which can be obtained employing a common DSP (Digital Signal Processor).

### Object of the Invention

It is one object of the present invention to find out a method for the acknowledgement of the echo suppressor or echo canceller disabling tone which while assuring a high reliability, can be implemented employing a common DSP and a maximum processing time, compatible with a real time implementation of the acknowledgement function of the disabling tone presence.

A further object of the invention is to enable the implementation of the acknowledgement process of the echo suppressor or echo canceller disabling tone with simplified hardware, at low cost.

### Summary of the Invention

The invention fully reaches these objects through an acknowledgement method of the echo the echo suppressor or echo canceller disabling tone as set forth in claim 1.

According to an aspect of the invention, the compliance of the acknowledgement system with some criteria of CCITT Recommendations can be better assured performing preventive adequacy tests of the filtered and sub-sampled complex signal level and of the same signal averaged on a sufficiently long observation period (for instance 8-10 times the decimation factor) before enabling the relevant comparisons with similar sub-sampled, non filtered signals. This to the purpose to reject disabling tones under the minimum level (-35 dB) determined by CCITT Recommendations.

Preferably the length of filters employed is equal to the decimation factor (M) so that the input sequence can be directly processed per blocks having length M without being stored.

As it shall be pointed out in the description hereafter, the algorithm of the invention is such to require the execution of three Droducts and three additions for each sample PCM at input, in practice required for the updating of three accumulators: a first accumulator relating to the measurement of the digitized signal power, a second accumulator relevant to the bandpass digital filter and the third accumulator relevant to the corresponding Hilbert transformer. Accumulators can have for instance 32 bit capacity.

The performance of these simple operations requires a very reduced processing time.

The above mentioned objects are also achieved through a device for the acknowledgement of an echo suppressor or an echo canceller disabling tone in a telephone exchange, as set forth in claim 11.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Figure 1 is a block diagram of the invention device;
Figure 2 shows the mask of the frequency response of the low pass filter (BP) and of the Hilbert transformer (HT) of the diagram in Fig. 1;
Figure 3 is a flow chart of the invention procedure according to a preferred realization form;
Figure 4 is a flow chart of the program implementing the invention device;
Figure 5 is a flow chart of operations performed in the Identification of the general diagram of Fig. 4;
Figure 6 is a flow chart showing the operations performed by the Release block of the general diagram of Fig. 4.

### Detailed Description of a Preferred Embodiment

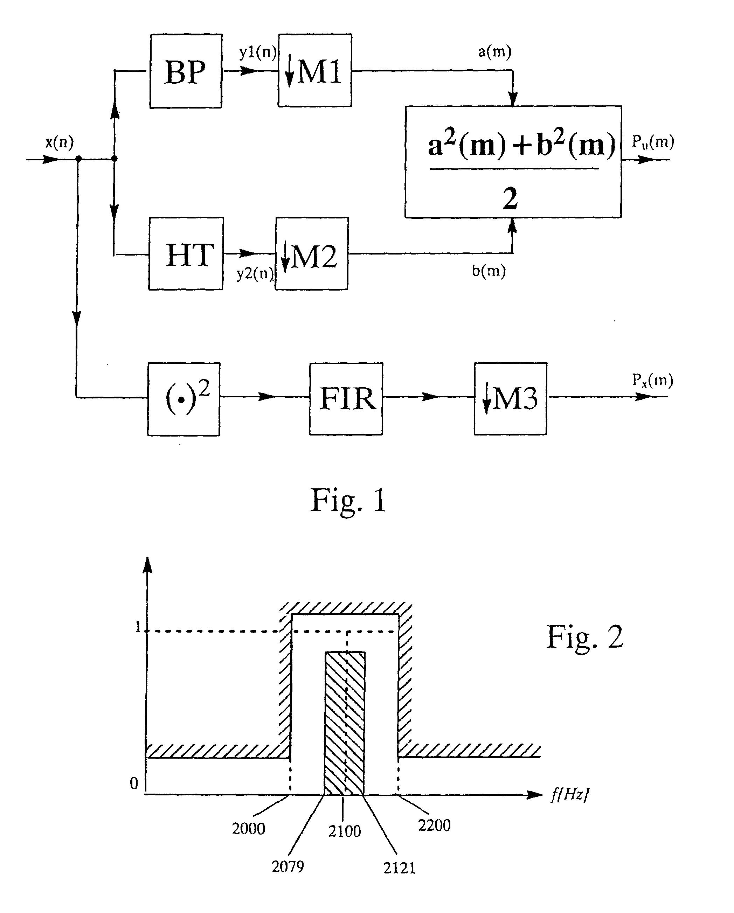

Referring to the diagram in Fig. 1, x(n) represents a digital signal obtained sampling the telephone signal received at the telephone exchange, at a given sampling frequency which can be typically of 8KHz and digitizing said samples in the known way.

The input digitized signal x(n) is filtered at the same time through a bandpass filter (BP) and through a Hilbert transformer (HT). The filter (BP) has a mask (response in frequency) shown in Fig. 2. Preferably the non attenuated band is included between 2000 and 2200 Hz, and therefore it is narrower than the band in which the disabling signal could be accepted, according to CCITT Recommendations. The Hilbert transformer (HT), essentially has the same mask of the bandpass filter (BP) as far as the response in frequency module is concerned, but shows a 90° phase shifting versus the filter (BP) output. Output signals of blocks (BP) and (HT), y1(n) and y2(n), respectively are processed through identical decimator devices M1 and M2 reducing in the same way, for instance 256 times, the sampling frequency, that is they employ a sample (a(m) and b(m)) every 256 samples virtually received at input, that is m = n/256.

Signals coming out from blocks M1 and M2 (a(m) and b(m)) are 90° phase shifted between them and represent the components of a complex filtered signal derived from the input digital signal x(n).

The two flows a(m) and b(m) reach the input of a processing block calculating the power of the filtered complex digital signal, producing at output the digital signal indicated with Pᵤ(m).

Likewise, the input digitized telephone signal x(n) is treated in a block (.)² suitable to produce the relevant square and then, in a filter FIR suitable to make the arithmetic mean of samples raised to square on a number M of samples equal to the decimation factor of the decimator device M3 following in cascade the filter FIR. The decimation factor (Mi) of the device M3 is identical to that of devices M1 and M2 and produces at output a sub-sampled digital signal (Px(m)) representing the value of the power of the non filtered input digitized signal x(n).

Of course, the architecture shown in the block diagram of Fig. 1, from the conceptual point of view, can be simplified realizing BP and HT components with FIR filters and calculating digital flows a(m) and b(m), according to techniques which are known by a skilled in the art.

Using filters having length equal to the decimation factor Mi, the input sample x(n) can be directly processed without the need to store it, making in practice a processing of blocks having Mi length of the input signal.

The choice of a decimation factor Mi of 256, and therefore of a filter length equal to 256, facilitates the implementation of filters with very narrow non attenuated band and a strong attenuation (>46 dB) in stop band.

As shown in Fig. 2, the non attenuated band can extend from 2000 to 2200 Hz, even through the limits required by CCITT Recommendations are 1900 and 2350 Hz, respectively, thus obtaining an accentuated noise rejection.

It is clear that neglecting the noise presence, a simple comparison between the two signals Pᵤ(m) and Pₓ(m) representing the filtered signal power and the non filtered one respectively, would enable to determine the presence or lack of the echo suppressor disabling signal. A particularly simple algorithm has been found, perfectly able to assure the reliability of the function of disabling tone presence acknowledgement even in presence of noise, within the limits of the above mentioned CCITT Recommendations.

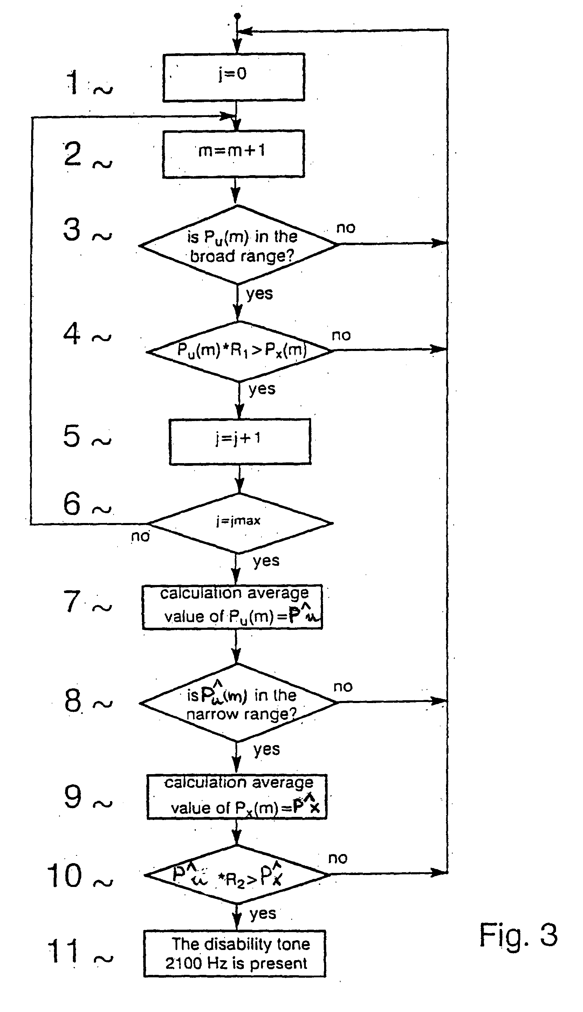

Therefore, according to an important and preferred embodiment of the invention, the acknowledgement procedure is that shown as flow chart in Fig. 3.

Considering that the digital signal Pᵤ(m), representing the power of the input digital signal filtered by blocks BP and HT shows oscillations due to the noise allowed by specifications even when the sinusoid forcing to 2100 Hz has comparatively constant amplitude and that extreme values of these oscillations are of about -3 dB and 1.76 dB, the Pᵤ(m) samples are pre-processed to see if they exceed or not a first threshold value, purposely widened to >-34 dB, for instance. Only if the sample is included in the allowed widened range, a first comparison is enabled between the Pᵤ(m) signal and the Pₓ(m) signal, representing the power of the digitized, non filtered, input signal, fixing a first increased discrimination threshold R₁ which can be set around 2.5 approx.

This first comparison processing among the sub-sampled power signals of the digitized, filtered and non filtered signal, made on single pairs of samples of said sub-sampled signals, can be iteratively made for a given number of times. It has been found that a maximum number of "turns" of this internal processing loop can be fixed 6 to 12, and preferably at 8 (jmax = 8), even if a lower or higher number of cycles versus these limits can be fixed.

The flow diagram of Fig. 3 begins therefore with a phase 1 where j=0.

In phase 2, a time index which is a function of the decimation factor of said M units is indicated with m.

In phase 3 said pre-processing operation aiming at inspecting the exceeding or not of a first threshold value is made.

In phase 4 the comparison is made between the Pᵤ(m) signal and the Pₓ(m).

In phase 5 the j value is increased by one unit and in phase 6 the comparison is made between the present j value and the pre-set jmax value.

For this observation period, defined by the maximum number of tours of the internal loop, it is also calculated the average value (P^ᵤ) of the power Pᵤ(m) of the filtered signal and this mean value (P^ᵤ) is previously tested in phase 8 to define if it is included in a narrow allowed range, defining for instance a threshold >-33 dB (narrower than the >-34 dB widened threshold of the similar test conducted on the single sample). Also in this case, the non exceeding of the threshold initializes the process shown in Fig. 3.

Processing contemplates also a phase 9 in which the calculation of the average value (P^ₓ) is made, for the same observation interval, of signal Pₓ(m), representing the power of the digitized, non filtered, input signal.

The final comparison between mean values of the filtered signal power (P^ᵤ) and of the non filtered signal power (P^ₓ) is made in phase 10, determining a lower discrimination threshold R₂, for instance around 1.5.

If the comparison made in phase 10 gives positive results, the flow chart terminates in a phase 11 where it is stated the presence of the 2100 Hz disabling tone.

It was found that the above mentioned algorithm can assure the acknowledgement of the presence of an echo suppressor disabling signal in a completely reliable way, in any condition included in the above mentioned CCITT G.164 Recommendations.

### EXAMPLE

The device of the invention has been implemented in the frame of a development plan aiming at realizing the following functions for eight PCM junctions:
- *"soft processor"* for the electrical echo generated by the fix telephone user, in compliance with the Recommendation DECT ETD 300 175-8 clause 7.10, requirement 2;
- generation of an Artificial Echo, relating to the mobile telephone user, in compliance with the Recommendation DECT ETD 300 175-8 clause 7.4.1.2, requirement A;
- disabling of the previous functions with 2100 Hz tone, in compliance with the Recommendation CCITT G.164.

The component used to implement the processing program is microprocessor 1610 DSP of AT&T, particularly suitable to the digital treatment of a voice signal, having the following main characteristics:
- Instruction cycle 25 ns;
- Parallel multiplier with 16 bit inputs and 36 bit accumulator;
- 16 bit RAM internal memory for programs and data;
- Input and output registers for the acquisition of PCM data, synchronization and performance control.

The program and data memory of the microprocessor employed for the device implementation has been:
- 16 bit, 180 words program memory;
- 16 bit, 520 words constant data memory;
- 16 bit, 14 words variable data memory;

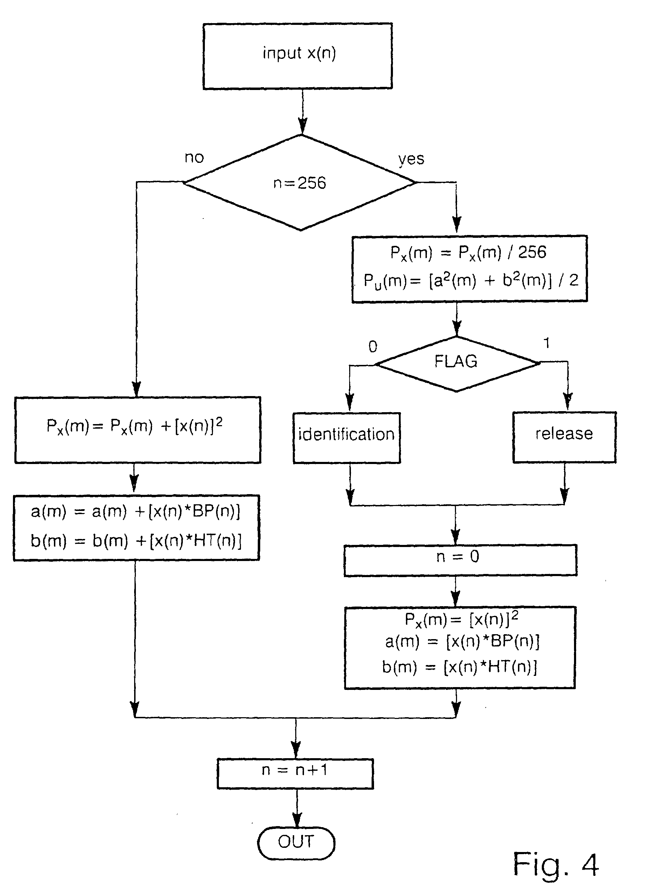

The flow diagram followed in the program implementing the device of the invention is shown in Fig. 4. With n we indicate the time index (absolute) or the module 256 time index, according to the context. BP(.) and HT(.) indicate coefficients relevant to the band pass filter (BP) and to the Hilbert transformer (HT).

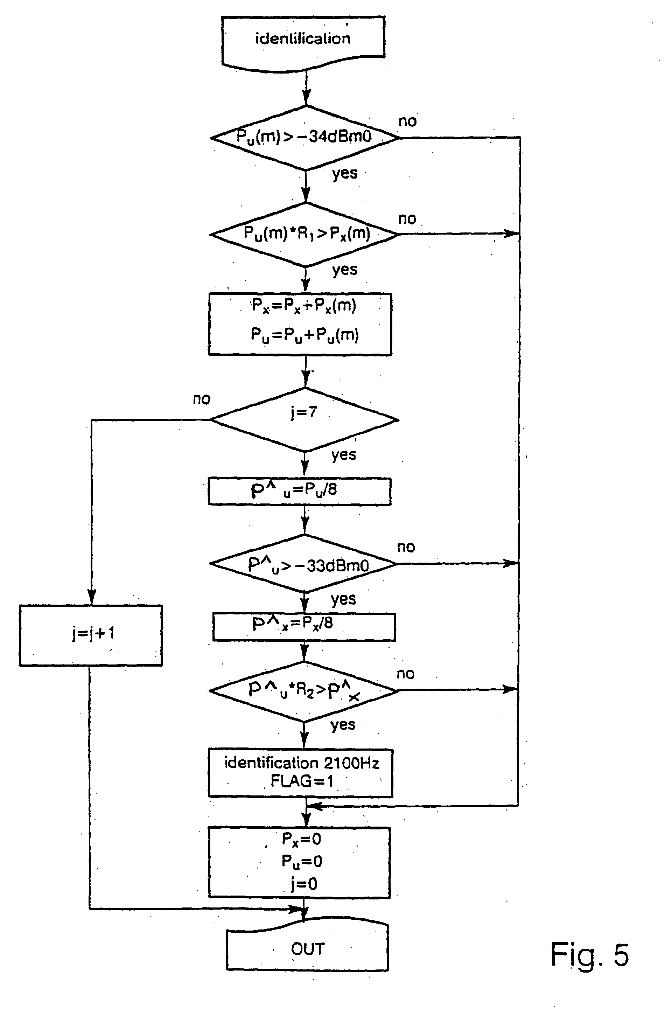

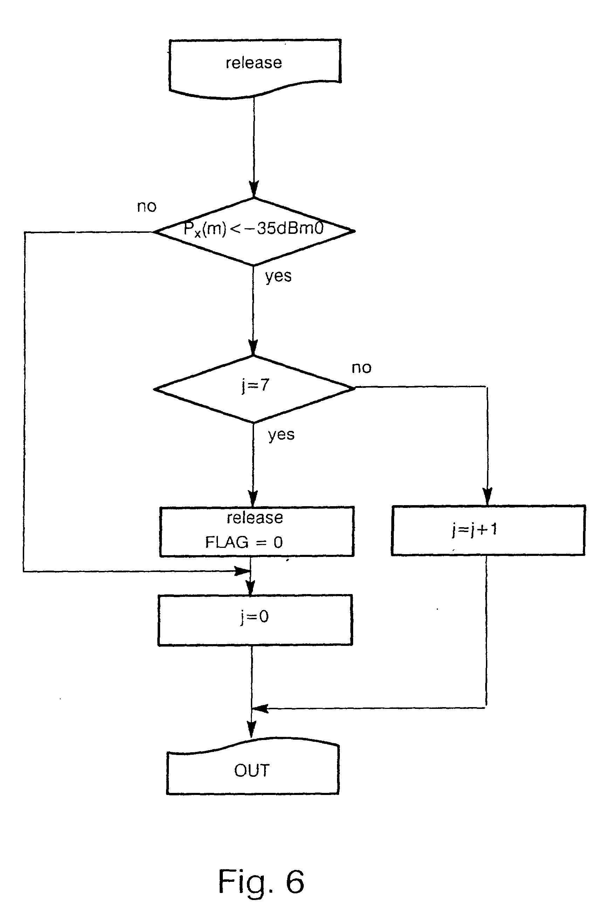

Flow diagrams of operations performed by the "Identification" block and by the "Release" block of the general diagram of Fig. 4, are given as flow diagrams in Fig. 5 and 6, respectively, not described in detail since the same can be easily understood considering the previous descriptions referred to flow diagram of Fig. 3.

As shown in Fig. 4, typical operations made for each sample PCM at input, that is every n<256, are:
- updating of a 32 bit accumulator Pₓ (m), relevant to the power measurement of the digitized voice signal;
- updating of a 32 bit accumulator a(m), relevant to the coefficients of the bandpass filter (BP);
- updating of a 32 bit accumulator b(m), relevant to the coefficients of the Hilbert transformer (HT).

In total, arithmetic operations made are three products and three additions,

In the implementation through the 1610 DSP processor, 55 instruction cycles are employed, including also updating instructions of variable data pointers.

Operations made every 256 PCM samples, that is each n = 256, are those relevant to the acknowledgement of the 2100 Hz disabling tone or at disabling release.

Only in case of execution of the acknowledgement block, operations made assume some complexity, as per Fig. 5. Always in the implementation with DSP1610 and following the flow diagram shown in Fig. 5, 160 instruction cycle max. result employed in the worst case.

Computer simulations and tests made on the device so implemented with DSP1610, have checked in all the cases foreseen by Recommendations CCITT G.164, the correct operation of the invention algorithm.

According to the example described above, the device of the invention requires for each PCM sample at input, the execution of a minimum number of arithmetic operations and therefore a typical processing time resulting of about one third of the time available in a tone acknowledgement phase of 2100 Hz. Furthermore, the tone acknowledgement is made only every 256 PCM samples.

In the case several independent devices are realized with a unique microprocessor, the total processing time required between a PCM sample and the next one is equal to the sum of typical processing times of each device plus the acknowledgement time of only one of them. In fact, it is sufficient to adequately initialize pointing indexes of coefficients of the bandpass filter (BP) and of the Hilbert transformer (HT) of each device to avoid to execute the 2100 Hz disabling tone identification routine in coinciding PCM frames.

## Claims

1. Method for the acknowledgement of the presence of a disabling tone of an echo suppressor or an echo canceller on a telephone line, including the steps to sample and digitize the received telephone signal, obtaining an input digital signal (x(n)) consisting of a sequence of digital signals, obtaining from said input digital signal (x(n)) a complex signal (a(m),b(m)) by filtering the same through a bandpass filter and a Hilbert transformer having an essentially identical response in frequency and obtaining two signals (y1(n),y2(n)) respectively with the same phase and 90-degree phase shifted with respect to the phase of said digitized signal and subsampling (M1, M2) the two signals (y1(n),y2(n)), **characterized by** the fact that the presence of said disabling tone is acknowledged from the continuous repeated exceeding of two predetermined discrimination thresholds,
a first threshold comparing a ratio of a first pair of values (Pₓ(m) and Pᵤ(m), respectively of a first sub-sampled signal (pₓ(m)), representing the power of said input digital signal, and of a second similarly subsampled signal (pᵤ(m)), representing the power of the complex signal and a second threshold comparing a ratio of a second pair of values p^ₓ and p^ᵤ of said first and second sub-sampled signals Pₓ(m), Pᵤ(m), averaged in a predetermined observation period.

2. Method according to claim 1, **characterized by** the fact to include the steps of
Filtering said input digital signal (x(n)) through a bandpass filter and a Hilbert transformer having identical mask, obtaining two quadrature components (y1(n), y2(n)) constituing a filtered complex signal;
sub-sampling with a decimation factor M, of said two components (y1(n), y2(n)) obtaining two sub-sampled components (a(m), (b(m)) of said filtered complex signal;
summing the squares of said two sub-sampled components (a(m), (b(m)), obtaining a signal representing the power of said complex filtered and sub-sampled signal;
comparing a multiple (R1) of the power of said filtered complex and sub-sampled signal (Pᵤ(m)) evaluated every M samples of said input sequence with the power of a non filtered and sub-sampled signal with a decimation factor M(Pₓ(m)) obtained from said input sequence and evaluated every M samples, fixing a first discrimination threshold;
comparing values derived from the power of said two signals, similarly sub-sampled, evaluated every M samples and averaged on a rather long observation period, fixing a second discrimination threshold, than the first discrimination one;
acknowledging the presence of said disabling tone from the continuous repeated exceeding of both discrimination thresholds mentioned above.

3. Method according to claims 1 and 2, **characterized by** the fact that the power of said complex filtered signal is submitted to a first processing to define if it exceeds a third threshold level before enabling said first comparison with said first discrimination threshold.

4. Method according to claims 1 and 2, **characterized by** the fact that the averaged value of the power of said complex filtered signal is submitted to a second processing to define if it exceeds a fourth threshold value higher than said first threshold value, before enabling said second comparison with said second discrimination threshold.

5. Method according to claim 3, **characterized by** the fact that said first processing and said first comparison are made for a given number of cycles (j) before starting said second processing.

6. Method according to claim 5, **characterized by** the fact that the number of cycles of said first processing and said first comparison is around 8.

7. Method according to claim 2, **characterized by** the fact that said first discrimination threshold is increased and defined by a first coefficient (R1) around 2.5.

8. Method according to claims 2 and 6, **characterized by** the fact that said second discrimination threshold is increased by a coefficient lower than that of augmentation of said first threshold and showing a value around 1.5.

9. Method according to claim 2, **characterized by** the fact that Filtering of said digitized signal is made with filters of M length without storing the input digitized signal.

10. Method according to claim 1, **characterized by** the fact that the non attenuated band of said bandpass filter and of said Hilbert transformer, extends from 2000 to 2200 Hz.

11. Device for the acknowledgement of the disabling tone of an echo suppressor or an echo canceller connected to a telephone line, including:
- a first digital bandpass filter (BP) with non attenuated band centered on the frequency of said disabling tone suitable to receive at input a digitized telephone signal (x(n));
- a Hilbert transformer (HT), having filtering characteristics similar to those of said bandpass filter (BP) suitable to receive at input said digitized signal;
- two decimators (M1, M2) each one connected to the output of one of said bandpass filters (BP) and Hilbert transformer (HT);
- means suitable to generate a (Pᵤ(m)) signal representing the power of a digital complex filtered signal, and obtained from two components (a(m), b(m)) available at the output of said decimators (M1, M2);
- means suitable to receive at input said digitized telephone signal (x(n)) and to produce at output a (Pₓ(m)) sub-sampled signal with a decimation factor identical to the decimation factor of said decimators (M1, M2) representing the power of said input digitized signal, not filtered;
- processing means suitable to receive said sub-sampled power signals (Pᵤ(m), Pₓ(m)), respectively of the input digitized signal (x(n)), filtered and not filtered to calculate an average (P^ᵤ, P^ₓ) of the sub-sampled power signals in a predetermined observation period and to determine the presence of said disabling tone through comparisons among a ratio of said signals (Pᵤ(m), Pₓ(m)). representing a first threshold value, and among a ratio of the averaged sub-sampled power signals representing a second threshold value.

12. Device according to claim 11, **characterized by** the fact that the length of the bandpass filter (BP) and of the Hilbert transformer (HT) is identical to the decimation factor of said decimators (M1, M2).

13. Device according to claim 11, **characterized by** the fact that said processing means include:
- a first accumulator for the power value of the input digitized signal;
- a second accumulator for coefficients of said bandpass filters (BP);
- a third accumulator for coefficients of said Hilbert transformer (HT).

## Patentansprüche

1. Verfahren zur Quittierung des Vorhandenseins eines Ausschaltetons eines Echounterdrückers oder eines Echokompensierers auf einer Fernsprechleitung, umfassend die Schritte eines Abtastens und Digitalisierens des empfangenen Fernsprechsignals, wobei ein digitales Eingangssignal (x(n)) erhalten wird, das aus einer Sequenz von digitalen Signalen besteht, wobei von dem digitalen Eingangssignal (x(n)) ein komplexes Signal (a(m),b(m)) erhalten wird, und zwar durch Filtern desselben durch ein Bandpassfilter und eine Hilberttransformationseinrichtung mit einem im Wesentlichen identischen Frequenzgang und Erhalten von zwei Signalen (y1(n), y2(n)) respektive mit derselben Phase und um 90° phasenverschoben in Bezug zur Phase des digitalisierten Signals und Unterabtasten (M1/M2) der zwei Signale (y1(n),y2(n)), **gekennzeichnet durch** die Tatsache, dass das Vorhandensein des Ausschaltetons von dem ununterbrochenen wiederholten Überschreiten von zwei vorbestimmten Diskriminierungsschwellenwerten quittiert wird,
einem ersten Schwellenwert, der ein Verhältnis eines ersten Paars Werte (Pₓ(m) und Pᵤ(m)), respektive eines ersten unterabgetasteten Signals (Pₓ(m)), das die Leistung des digitalen Eingangssignals darstellt, und eines zweiten ähnlich unterabgetasteten Signals (Pᵤ(m)), das die Leistung des komplexen Signals darstellt, vergleicht,
und einem zweiten Schwellenwert, der ein Verhältnis eines zweiten Paars Werte P^ₓ und P^ᵤ des ersten und zweiten unterabgetasteten Signals (Pₓ(m),Pᵤ(m)), die in einer vorbestimmten Beobachtungsdauer gemittelt sind, vergleicht.

2. Verfahren nach Anspruch 1, **gekennzeichnet durch** die Tatsache, dass es die Schritte umfasst:
Filtern des digitalen Eingangssignals (x(n)) **durch** ein Bandpassfilter und eine Hilberttransformationseinrichtung mit identischer Maske, wobei zwei Quadraturkomponenten (y1(n), y2(n)) erhalten werden, die ein gefiltertes komplexes Signal konstituieren;
Unterabtasten der zwei Komponenten (y1(n),y2(n)) mit einem Dezimierungsfaktor M, wobei zwei unterabgetastete Komponenten (a(m),(b(m)) des gefilterten komplexen Signals erhalten werden;
Summieren der Quadrate der zwei unterabgetasteten Komponenten (a(m),(b(m)), wobei ein Signal erhalten wird, das die Leistung des komplexen gefilterten und unterabgetasteten Signals darstellt;
Vergleichen eines Vielfachen (R1) der Leistung des gefilterten komplexen und unterabgetasteten Signals (Pᵤ(m)), das alle M Abtastwerte der Eingangssequenz ausgewertet ist, mit der Leistung eines nicht gefilterten und unterabgetasteten Signals mit einem Dezimierungsfaktor M, (Pₓ(m)), das von der Eingangssequenz erhalten und alle M Abtastwerte ausgewertet ist, wobei ein erster Diskriminierungsschwellenwert bestimmt wird;
Vergleichen der Werte, die von der Leistung der zwei Signale hergeleitet sind, die ähnlich unterabgetastet, alle M Abtastwerte ausgewertet und über eine ziemlich lange Beobachtungsdauer gemittelt sind, wobei ein zweiter Diskriminierungsschwellenwert bestimmt wird, der kleiner als der erste Diskriminierungswert ist;
Quittieren des Vorhandenseins des Ausschaltetons von dem ununterbrochenen wiederholten Überschreiten von beiden Diskriminierungsschwellenwerten, die oben erwähnt sind.

3. Verfahren nach den Ansprüchen 1 und 2, **gekennzeichnet durch** die Tatsache, dass die Leistung des komplexen gefilterten Signals einer ersten Verarbeitung unterzogen wird, um zu definieren, ob sie einen dritten Schwellenwert überschreitet, bevor der erste Vergleich mit dem ersten Diskriminierungsschwellenwert freigegeben wird.

4. Verfahren nach den Ansprüchen 1 und 2, **gekennzeichnet durch** die Tatsache, dass der gemittelte Wert der Leistung des komplexen gefilterten Signals einer zweiten Verarbeitung unterzogen wird, um zu definieren, ob er einen vierten Schwellenwert überschreitet, der größer als der erste Schwellenwert ist, bevor der zweite Vergleich mit dem zweiten Diskriminierungsschwellenwert freigegeben wird.

5. Verfahren nach Anspruch 3, **gekennzeichnet durch** die Tatsache, dass die erste Verarbeitung und der erste Vergleich für eine gegebene Anzahl von Zyklen (j) gemacht werden, bevor das zweite Verarbeiten begonnen wird.

6. Verfahren nach Anspruch 5, **gekennzeichnet durch** die Tatsache, dass die Anzahl von Zyklen der ersten Verarbeitung und des ersten Vergleichs etwa 8 beträgt.

7. Verfahren nach Anspruch 2, **gekennzeichnet durch** die Tatsache, dass der erste Diskriminierungsschwellenwert **durch** einen ersten Koeffizienten (R1) von etwa 2,5 erhöht und definiert wird.

8. Verfahren nach den Ansprüchen 2 und 6, **gekennzeichnet durch** die Tatsache, dass der zweite Diskriminierungsschwellenwert **durch** einen Koeffizienten erhöht wird, der niedriger ist, als derjenige einer Erhöhung des ersten Schwellenwerts, und wobei ein Wert von etwa 1,5 aufgezeigt wird.

9. Verfahren nach Anspruch 2, **gekennzeichnet durch** die Tatsache, dass ein Filtern des digitalisierten Signals mit Filtern von M Länge ohne ein Speichern des digitalisierten Eingangssignal vorgenommen wird.

10. Verfahren nach Anspruch 1, **gekennzeichnet durch** die Tatsache, dass sich das nicht gedämpfte Band des Bandpassfilters und der Hilberttransformationseinrichtung von 2000 bis 2200 Hz erstreckt.

11. Vorrichtung zur Quittierung des Ausschaltetons eines Echounterdrückers oder eines Echokompensierers, der mit einer Fernsprechleitung verbunden ist, umfassend:
- ein erstes digitales Bandpassfilter (BP) mit nicht gedämpftem Band, das auf der Frequenz des Ausschaltetons zentriert ist, das geeignet ist, um am Eingang ein digitalisiertes Fernsprechsignal (x(n)) zu empfangen;
- eine Hilberttransformationseinrichtung (HT) mit Filterkenndaten, die denjenigen des Bandpassfilters (BP) ähneln, die geeignet ist, um am Eingang das digitalisierte Signal zu empfangen;
- zwei Dezimierer (M1,M2), von denen jeder mit dem Ausgang von einem von den Bandpassfiltern (BP) und der Hilberttransformationseinrichtung (HT) verbunden ist;
**dadurch gekennzeichnet, dass** sie weiter umfasst:
- eine Einrichtung, die geeignet ist, um ein (Pᵤ(m))-Signal zu erzeugen, das die Leistung eines digitalen komplexen gefilterten Signals darstellt und von zwei Komponenten (a(m), b(m)) erhalten ist, die am Ausgang der Dezimierer (M1,M2) verfügbar sind;
- eine Einrichtung, die geeignet ist, um am Eingang das digitalisierte Fernsprechsignal (x(n)) zu empfangen und am Ausgang ein unterabgetastetes (Pₓ(m))-Signal mit einem Dezimierungsfaktor zu erzeugen, der identisch mit dem Dezimierungsfaktor der Dezimierer (M1,M2) ist, das die Leistung des digitalisierten Eingangssignals darstellt, das nicht gefiltert ist;
- Verarbeitungseinrichtungen, die geeignet sind, um die unterabgetasteten Leistungssignale (Pᵤ(m),Pₓ(m)) respektive von dem digitalisierten Eingangssignal (x(n)) zu empfangen, die gefiltert und nicht gefiltert sind, um einen Mittelwert (P^ᵤ, P^ₓ) der unterabgetasteten Leistungssignale in einer vorbestimmten Beobachtungsdauer zu berechnen und um die Anwesenheit des Ausschaltetons durch Vergleiche zwischen einem Verhältnis der Signale. (Pᵤ(m),Pₓ(m)), das einen ersten Schwellenwert darstellt, und zwischen einem Verhältnis der gemittelten unterabgetasteten Leistungssignale, das einen zweiten Schwellenwert darstellt, zu bestimmen.

12. Vorrichtung nach Anspruch 11, **gekennzeichnet durch** die Tatsache, dass die Länge des Bandpassfilters (BP) und der Hilberttransformationseinrichtung (HT) identisch mit dem Dezimierungsfaktor des Dezimierers (M1,M2) ist.

13. Vorrichtung nach Anspruch 11, **gekennzeichnet durch** die Tatsache, dass die Verarbeitungseinrichtungen umfassen:
- einen ersten Akkumulator für den Leistungswert des digitalisierten Eingangssignals;
- einen zweiten Akkumulator für Koeffizienten der Bandpassfilter (BP);
- einen dritten Akkumulator für Koeffizienten der Hilberttransformationseinrichtung (HT).

## Revendications

1. Procédé de délivrance d'accusé de réception de la présence d'une tonalité d'invalidation d'un suppresseur d'échos ou d'un dispositif d'annulation d'échos dans une ligne téléphonique, incluant les étapes consistant à échantillonner et numériser le signal téléphonique reçu, obtenir un signal numérique d'entrée (x(n)) constitué par une séquence de signaux numériques, obtenir à partir dudit signal d'entrée numérique (x(n)) un signal complexe (a(m), b(m)), filtrer ce signal au moyen d'un filtre passe-bande et d'une unité de transformation de Hilbert possédant une réponse en fréquence essentiellement identique et obtenir deux signaux (y1(n), y2(n)) respectivement avec la même phase et une phase à 90 degrés décalée par rapport à la phase dudit signal numérisé, et sous-échantillonner (M1, M2) les deux signaux (y1(n), y2(n)),
**caractérisé en ce qu'**un accusé de réception de la présence de ladite tonalité d'invalidation est délivré à partir du dépassement répété et continu de deux seuils de discrimination prédéterminés,
que l'on compare, à un premier seuil, un rapport d'une première paire de valeurs (Pₓ(m) et P_{U}(m)), respectivement d'un premier signal sous-échantillonné (Pₓ(m)), représentant la puissance dudit signal d'entrée numérique, et d'un second signal sous-échantillonné de façon similaire (Pᵤ(m)) représentant la puissance du signal complexe, et
que l'on compare, à un second seuil, un rapport d'une seconde paire de valeurs (P^ₓ et P^ᵤ) desdits premier et second signaux sous-échantillonnés (Pₓ(m), Pᵤ(m)), dont la moyenne est formée pendant une période d'observation prédéterminée.

2. Procédé selon la revendication 1, **caractérisé en ce qu'**il comprend les étapes consistant à
filtrer ledit signal numérique d'entrée (x(n)) au moyen d'un filtre passe-bande et d'une unité de transformation de Hilbert comportant un masque identique, en obtenant deux composantes en quadrature (y1(n), y2(n)) constituant un signal complexe filtré;
sous-échantillonner un facteur de décimation M desdites deux composantes (y1(n), y2(n)) en obtenant deux composantes sous-échantillonnées (a(m), b(m)) dudit signal complexe filtré;
additionner les carrés desdites deux composantes sous-jacentes sous-échantillonnées (a(m), b(m)), en obtenant un signal représentant la puissance dudit signal complexe filtré et sous-échantillonné;
comparer un multiple (R1) de la puissance dudit signal complexe filtré et sous-échantillonné (Pᵤ(m)), évalué tous les M échantillons de ladite séquence d'entrée, à la puissance d'un signal non filtré et sous-échantillonné avec un facteur de décimation M(Pₓ(m)) obtenu à partir de ladite séquence d'entrée et évalué tous les M échantillons, en fixant un premier seuil de discrimination;
comparer des valeurs dérivées de la puissance desdits deux signaux, sous-échantillonnés de façon similaire, évalués tous les M échantillons et dont la moyenne est formée sur une période d'observation assez longue, en fixant un second seuil de discrimination inférieur au premier seuil de discrimination;
accuser réception de la présence de ladite tonalité d'invalidation à partir du dépassement répété et continu des deux seuils de discrimination mentionnés précédemment.

3. Procédé selon les revendications 1 et 2,
**caractérisé en ce que** la puissance dudit signal filtré complexe est soumise à un premier traitement visant à définir si elle dépasse un troisième niveau de seuil avant d'autoriser ladite première comparaison audit premier seuil de discrimination.

4. Procédé selon les revendications 1 et 2,
**caractérisé en ce que** la valeur moyenne de la puissance dudit signal filtré complexe est soumise à un second traitement visant à définir si elle dépasse une quatrième valeur de seuil supérieure à ladite troisième valeur de seuil avant d'autoriser ladite seconde comparaison audit second seuil de discrimination.

5. Procédé selon la revendication 3, **caractérisé en ce que** ledit premier traitement et ladite première comparaison sont réalisés pour un nombre donné de cycles (j) avant le démarrage dudit second traitement.

6. Procédé selon la revendication 5, **caractérisé en ce que** le nombre de cycles dudit premier traitement et de ladite première comparaison est égal à environ 8.

7. Procédé selon la revendication 2, **caractérisé en ce que** ledit premier seuil de discrimination est accru et est défini par un premier coefficient (R1) égal à environ 2,5.

8. Procédé selon les revendications 2 et 6,
**caractérisé en ce que** ledit second seuil de discrimination est accru d'un coefficient inférieur au coefficient d'augmentation dudit premier seuil et présentant une valeur égale à environ 1,5.

9. Procédé selon la revendication 2, **caractérisé en ce que** le filtrage dudit signal numérisé est réalisé avec des filtres ayant une longueur M sans mémorisation du signal numérisé d'entrée.

10. Procédé selon la revendication 1, **caractérisé en ce que** la bande non atténuée dudit filtre passe-bande et de ladite unité de transformation de Hilbert s'étend de 2000 à 2200 Hz.

11. Dispositif pour délivrer un accusé de réception de la tonalité d'invalidation d'un suppresseur d'échos ou d'un dispositif d'annulation d'échos connecté à une ligne téléphonique, comprenant:
- un premier filtre passe-bande numérique (BP) comportant une bande non atténuée centrée sur la fréquence de ladite tonalité d'invalidation convenant pour recevoir à son entrée un signal téléphonique numérisé (x(n));
- une unité de transformation de Hilbert (HT) possédant des caractéristiques de filtrage similaires à celles dudit filtre passe-bande (BP) convenant pour recevoir à l'entrée ledit signal numérisé;
- deux dispositifs de décimation (M1, M2) raccordés chacun à la sortie de l'un desdits filtres passe-bande (BP) et de l'unité de transformation de Hilbert (HT);
**caractérisé en ce qu'**il comporte en outre:
- dès moyens convenant pour produire un signal (Pᵤ(m)) représentant la puissance d'un signal filtré complexe numérique et obtenu à partir de deux composantes (a(m), b(m)) disponibles à la sortie desdits dispositifs de décimation (M1, M2);
- des moyens convenant pour recevoir à l'entrée ledit signal téléphonique numérisé (x(n)) et produire à la sortie un signal sous-échantillonné (Pₓ(m)) avec un facteur de décimation identique au facteur de décimation desdits dispositifs de décimation (M1, M2) représentant la puissance dudit signal numérisé d'entrée, non filtrée;
- des moyens de traitement convenant pour recevoir lesdits signaux de puissance sous-échantillonnés (Pᵤ(m), Pₓ(m)) respectivement du signal d'entrée numérisé (x(n)), filtré et non filtré, pour calculer une moyenne (P^ᵤ, P^ₓ) des signaux de puissance sous-échantillonnés pendant une période d'observation prédéterminée, et déterminer la présence de ladite tonalité d'invalidation au moyen de comparaisons entre un rapport desdits signaux (Pᵤ(m), Pₓ(m)) représentant et une première valeur de seuil, et entre un rapport des signaux de puissance moyens sous-échantillonnés représentant et une seconde valeur de seuil.

12. Dispositif selon la revendication 11,
**caractérisé en ce que** la longueur du filtre passe-bande (BP) et de l'unité de formation de Hilbert (HT) est identique au facteur de décimation desdits dispositifs de décimation (M1, M2).

13. Dispositif selon la revendication 11,
**caractérisé en ce que** lesdits moyens de traitement comprennent:
- un premier accumulateur pour la valeur de puissance du signal numérisé d'entrée;
- un second accumulateur pour des coefficients desdits filtres passe-bande (BP);
- un troisième accumulateur pour les coefficients de ladite unité de transformation de Hilbert (HT).
